(19) Europäisches Patentamt
European Patent Office
Office européen des brevets

(11) EP 2 567 988 B1

(12) EUROPÄISCHE PATENTSCHRIFT

(45) Veröffentlichungstag und Bekanntmachung des Hinweises auf die Patenterteilung:
**15.06.2016 Patentblatt 2016/24**

(51) Int Cl.:
***C08F 216/14*** *(2006.01)* ***C08F 220/06*** *(2006.01)*
***C08F 222/06*** *(2006.01)* ***C04B 24/26*** *(2006.01)*
***C08F 220/36*** *(2006.01)* ***C07C 57/00*** *(2006.01)*

(21) Anmeldenummer: **11180192.4**

(22) Anmeldetag: **06.09.2011**

(54) **Kammpolymere mit verzögerter alkalischer Hydrolyse**

Comb-polymer with delayed alkaline hydrolysis

Polyme en formede peigne avec hydrolyse alcaline retardée

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**13.03.2013 Patentblatt 2013/11**

(73) Patentinhaber: **Sika Technology AG**
**6340 Baar (CH)**

(72) Erfinder:
- **Sulser, Ueli**
**8103 Unterengstringen (CH)**
- **Frunz, Lukas**
**8057 Zürich (CH)**
- **Zimmermann, Jörg**
**8400 Winterthur (CH)**

(74) Vertreter: **Sika Patent Attorneys**
**c/o Sika Technology AG**
**Corp. IP Dept.**
**Tüffenwies 16**
**Postfach**
**8048 Zürich (CH)**

(56) Entgegenhaltungen:
**WO-A2-2010/029117 DE-A1-102005 061 153**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

### Technisches Gebiet

Die Erfindung betrifft Kammpolymere als Dispergiermittel für mineralische Bindemittel sowie Zwischenprodukte zur Herstellung derartiger Kammpolymere. Weiter bezieht sich die Erfindung auf eine Zusammensetzung enthaltend ein Kammpolymer und ein mineralisches Bindemittel. Ebenso befasst sich die Erfindung mit Verfahren zur Herstellung von Kammpolymeren sowie verschiedenen Verwendungen von Kammpolymeren im Zusammenhang mit mineralischen Bindemitteln.

### Stand der Technik

Ein wichtiges Zusatzmittel für in der Bauindustrie eingesetzte Bindemittelzusammensetzungen, wie z.B. Beton, Mörtel, Zemente, Gipse und Kalk, sind Dispergiermittel, welche als Verflüssiger oder wasserreduzierende Mittel wirken. Der Einsatz solcher Dispergiermittel ist seit langem bekannt. Solche Verflüssiger oder Dispergiermittel sind im Allgemeinen organische Polymere, welche dem Anmachwasser zugesetzt oder als Feststoff den Bindemittelzusammensetzungen beigefügt werden. Die Konsistenz der Zusammensetzung vor dem Abbinden wird dadurch in vorteilhafter Weise verändert. Insbesondere werden Fliessgrenze und Viskosität verringert, wodurch die Verarbeitbarkeit verbessert wird. Durch die Verringerung des Wasseranteils wird die Festigkeit der ausgehärteten Bindemittelzusammensetzung verbessert.

Als Dispergiermittel werden unter anderem Kammpolymere aus $\alpha,\beta$-ungesättigten Mono- und Polycarbonsäuren mit Polyalkylenseitenketten - sogenannte Superverflüssiger - eingesetzt. Entsprechende Verbindungen sind z.B. in der EP 1 138 697 B1 (Sika AG) beschrieben.

Bindemittelzusammensetzungen enthaltend derartige Kammpolymere zeigen zwar oft die erwünschte niedrige Anfangsviskosität. Die Viskosität nimmt aber teilweise schon nach kurzer Zeit markant zu, was das Zeitfenster für die Verarbeitung der Bindemittelzusammensetzung begrenzt. Für viele Anwendungen sind aber längere Verarbeitungszeiten wünschenswert oder gar notwendig.

Um die Verarbeitungsdauer zu erhöhen bzw. eine Langzeitverarbeitarkeit (engl. slump life) zu erreichen, wurden zwar zahlreiche Methoden empfohlen und spezielle Zusätze und Polymere entwickelt, welche den Bindemittelzusammensetzungen zugegeben werden können.

Die DE 10 2005 061 153 A1 beschreibt in diesem Zusammenhang beispielsweise Copolymere auf Basis von ungesättigten Mono- oder Dicarbonsäure-Derivaten (beispielsweise Acrylsäure oder Hydroxypropylacrylat) und Oxyalkylenglykol-Alkenylethern (z.B. Vinyloxybutylpolyethylenglykol) als Zusatzmittel für mineralische Bindemittel.

Aus der WO 2010/029117 A2 sind beispielsweise Copolymere aus ungesättigten Dicarbonsäuren (z.B. Maleinsäureanhydrid) und mindestens zwei unterschiedlichen ungesättigten Alkenylether mit $C_2$ - $C_4$-Oxyalkylenketten (z.B. Vinylpolyethylenglykol) sowie optional ethylenisch ungesättigten Monomeren (z.B. Hydroxypropylacrylat) bekannt.

Viele dieser Massnahmen sind aber kompliziert in der Herstellung, aufwändig in der Anwendung, zu teuer oder vermögen in Bezug auf die Verflüssigungswirkung nicht zu überzeugen.

Es besteht daher nach wir vor Bedarf nach alternativen Dispergiermitteln, welche die vorstehend genannten Nachteile nicht aufweisen.

### Darstellung der Erfindung

Aufgabe der vorliegenden Erfindung ist es daher, ein Dispergiermittel bereit zu stellen, welches bei guter Verflüssigungswirkung eine möglichst lange Verarbeitungsdauer von Bindemittelzusammensetzungen ermöglicht. Das Dispergiermittel soll insbesondere in Beton- oder Mörtelzusammensetzungen einsetzbar sein. Eine weitere Aufgabe besteht darin, ein Herstellverfahren für derartige Dispergiermittel zu schaffen.

Überraschenderweise wurde gefunden, dass ein Kammpolymer gemäss Anspruch 1 diese Aufgabe lösen kann. Das erfindungsgemässe Kammpolymer ermöglicht in hydraulisch abbindenden Zusammensetzungen eine mit herkömmlichen Kammpolymeren vergleichbare Wasserreduktion bei gleichzeitig beträchtlich erhöhter Verarbeitungsdauer oder verbesserter Langzeitverarbeitbarkeit.

Dies ist insbesondere auf die im Kammpolymer vorliegende Teilstruktureinheit **S3** zurückzuführen. Diese spezielle Teilstruktureinheit ist insbesondere durch Veresterung von Carboxylgruppen mit einem Polyalkylenglykolmonoalkylether, der eine terminale, sterisch gehinderte sekundäre Hydroxylgruppe der Form -$CH(R^3)OH$ aufweist, erhältlich.

Die so gebildete Estergruppe besitzt dank der sperrigen $R^3$-Gruppe eine grössere Hydrolysestabilität in alkalischem Medium bzw. in mineralischen Bindemittelzusammensetzungen. Dies wiederum führt zu einer länger anhaltenden Dispergierwirkung, was seinerseits eine verbesserte Langzeitverarbeitbarkeit des mineralischen Bindemittels zur Folge hat.

Die Aufgabe bezüglich des Herstellungsverfahrens wird durch die unabhängigen Verfahrensansprüche gelöst. Weitere Aspekte der Erfindung sind Gegenstand weiterer unabhängiger Ansprüche. Besonders bevorzugte Ausführungsformen der Erfindung sind Gegenstand der abhängigen Ansprüche.

**Wege zur Ausführung der Erfindung**

Ein erster Aspekt der Erfindung betrifft ein Kammpolymer Kammpolymer KP umfassend oder bestehend aus:

a Molanteilen einer Teilstruktureinheit **S1** der Formel I,

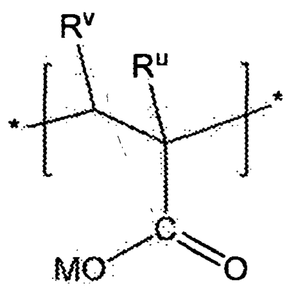

(I)

b Molanteilen einer Teilstruktureinheit **S2** der Formel II,

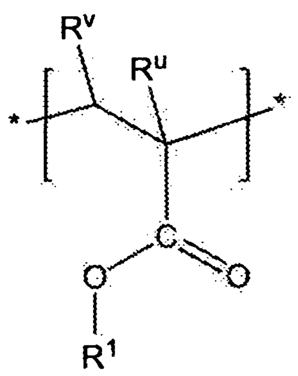

(II)

c Molanteilen einer Teilstruktureinheit **S3** der Formel III,

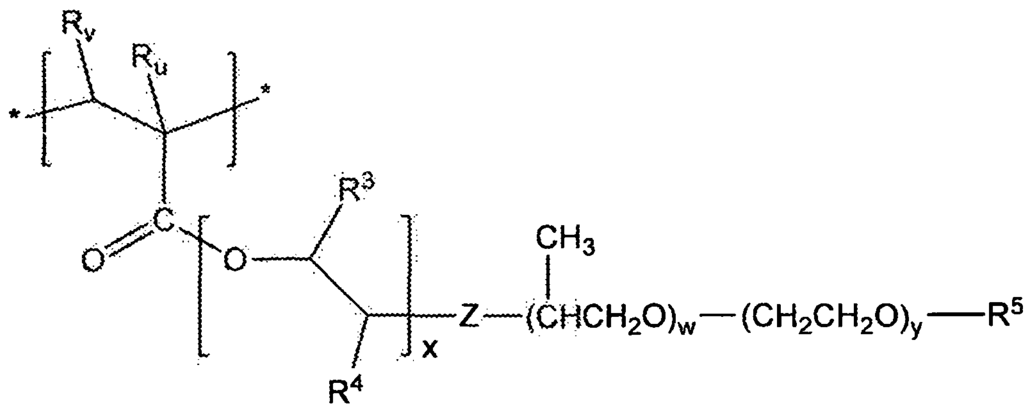

(III)

wobei

jedes M unabhängig von den anderen für $H^+$, ein Alkalimetallion, ein Erdalkalimetallion, ein Äquivalent eines zwei oder dreiwertigen Metallions, ein Ammoniumion oder eine organische Ammoniumgruppe steht,

jedes $R^u$ unabhängig von den anderen für Wasserstoff oder eine Methylgruppe steht,

jedes $R^v$ unabhängig von den anderen für Wasserstoff oder COOM steht,

jedes $R^1$, unabhängig voneinander ein $C_1$- bis $C_{20}$-Alkyl, -Cycloalkyl, -Alkylaryl oder $-[AO]_n-R^2$ darstellt, wobei A = $C_2$- bis $C_4$-Alkylen, $R^2$ = $C_1$- bis $C_{20}$ -Alkyl, -Cyclohexyl oder Alkylaryl darstellt; und n = 2 - 300,

jedes $R^3$, unabhängig von den anderen, für eine $C_1$- bis $C_5$-Alkylgruppe, bevorzugt eine Methyl-, Ethyl- oder Isopropylgruppe, steht,

jedes $R^4$, unabhängig von den anderen, für Wasserstoff, eine $C_1$- bis $C_5$-Alkylgruppe, bevorzugt Wasserstoff, steht,

jedes $R^5$, unabhängig von den anderen, eine Alkylgruppe mit 1 - 20 Kohlenstoffatomen oder eine Alkylarylgruppe mit 7 - 20 Kohlenstoffatomen bedeutet,

jedes Z, unabhängig von den anderen, für Sauerstoff oder N-$R^6$ steht, wobei $R^6$ für Wasserstoff, eine Alkylgruppe mit 1 - 20 Kohlenstoffatomen oder eine Alkylarylgruppe mit 7 - 20 Kohlenstoffatomen steht,

x die Werte 1 - 4 hat,

y die Werte 2 - 250 aufweist,

w die Werte 0 - 5 aufweist,

und wobei a, b, c, die Molanteile der jeweiligen Teilstruktureinheiten **S1, S2** und **S3,**

mit dem Molanteilverhältnis

$$a/b/c = (0.1 - 0.9) / (0 - 0.4) / (0.1 - 0.9),$$

insbesondere a/b/c = (0.4 - 0.8) / (0 - 0.25) / (0.1 - 0.4), speziell a/b/c = (0.4 - 0.8) / (0.05 - 0.25) / (0.1 - 0.4), und der Massgabe dass a + b + c = 1.

Die Abfolge der Teilstruktureinheiten **S1, S2** und **S3** kann alternierend, blockartig oder zufällig sein. Weiter ist es auch möglich, dass zusätzlich zu den Teilstruktureinheiten **S1, S2** und **S3** weitere Teilstruktureinheiten vorliegen.

Falls M eine organische Ammoniumgruppe ist, leitet sich diese insbesondere von Alkylaminen oder von C-hydroxylierten Aminen, insbesondere von Hydroxyniederalkylaminen, wie z.B. Ethanolamin, Diethanolamin oder Triethanolamin, ab.

Bevorzugt weisen die Teilstruktureinheiten **S1, S2** und **S3** zusammen einen Gewichtsanteil von wenigstens 50 Gew.-%, insbesondere wenigstens 90 Gew.-%, ganz besonders bevorzugt wenigstens 95 Gew.-%, am Gesamtsgewicht des Kammpolymers **KP** auf. Ebenfalls bevorzugt beträgt eine Gesamtzahl der in den Teilstruktureinheiten **S1, S2** und **S3** zusammen vorliegenden Atome wenigstens 50 %, insbesondere wenigstens 90 %, ganz besonders bevorzugt wenigstens 95 %, aller im Kammpolymer **KP** vorliegender Atome.

Insbesondere sind im Kammpolymer **KP** $R^u$ und $R^v$ gleich Wasserstoff. Damit lässt sich das Kammpolymer **KP** auf der Basis von Acrylsäuremonomeren herstellen, was aus ökonomischer Sicht interessant ist. Zudem verfügen derartige Kammpolymere im vorliegenden Zusammenhang über eine gute Verflüssigungswirkung und eine optimale Verarbeitungsdauer.

Mit Vorteil ist bei Rest $R^1 = [AO]_n-R^2$, wobei bevorzugt A ein $C_2$-Alkylen ist. Mit anderen Worten ist $R^1$ bevorzugt gleich $(CH_2CH_2O)_nR^2$. Dabei ist mit Vorteil n = 10 - 70, insbesondere n = 20 - 30. Der Rest $R^2$ ist insbesondere ein $C_1$- bis $C_{20}$-Alkyl, bevorzugt ist $CH_3$.

In einer vorteilhaften Ausführungsform ist $R^3 = CH_3$, $R^4$ = H und $R^5$ eine Alkylgruppe mit 1 - 20 Kohlenstoffatomen. Bevorzugt ist $R^5 = CH_3$.

Entsprechend einer vorteilhaften Ausführungsform ist Z = N-$R^6$. Dabei ist $R^6$ insbesondere eine Alkylgruppe mit 1 - 20 Kohlenstoffatome. Besonders bevorzugt ist $R^6 = CH_3$.

Weiter hat es sich als vorteilhaft erwiesen wenn y = 10 - 70, insbesondere y = 20 - 30, ist. Damit wird eine gute Verflüssigungswirkung erzielt. Zudem sind derartige Kammpolymere üblicherweise gut wasserlöslich.

Gemäss einer bevorzugten Ausführungsform ist x = 1. Dies insbesondere falls Z = N-$R^6$ ist.

Die Abfolge der Propylenoxideinheiten -$CH(CH_3)CH_2O$- und der Ethylenoxideinheiten -$CH_2CH_2O$- in der Teilstruktureinheit **S3** kann grundsätzlich alternierend, blockartig oder zufällig sein. Bevorzugt ist die Abfolge jedoch blockartig. Dabei folgt insbesondere der Block mit den Propylenoxideinheiten direkt auf die Struktureinheit Z. Der Block mit den Ethylenoxideinheiten folgt dann insbesondere auf den Block mit den Propylenoxideinheiten. Mit anderen Worten ist der Block mit den Propylenoxideinheiten bevorzugt zwischen der Teilstruktur Z und dem Block mit den Ethylenoxideinheiten angeordnet.

Bevorzugt ist y > w. Ein Verhältnis w/y ist bevorzugt ≥ 1/50. Insbesondere ist w/y ≤ 3/15. Im Besonderen ist 2/30 ≤ w/y ≤ 3/30.

Gemäss einer bevorzugten Ausführungsform ist w = 0. Falls w > 0 ist, ist w insbesondere gleich 1 - 3, im Speziellen 2 - 3.

Ein Verhältnis von y/x liegt mit Vorteil im Bereich von 0.5 - 250, insbesondere, 1 - 70, bevorzugt 2.5 - 70, speziell 2.5 - 30.

Ein gewichtsgemitteltes Molekulargewicht ($M_w$) des Kammpolymers **KP** beträgt insbesondere 5'000 - 150'000 g/mol, bevorzugt 10'000 - 100'000 g/mol. Ein zahlengemitteltes Molekulargewicht ($M_n$) des Kammpolymers **KP** beträgt mit Vorteil 3000 - 100'000 g/mol, insbesondere 8'000 - 70'000 g/mol.

Weiter hat es sich als zweckmässig erwiesen wenn ein Verhältnis von a/c = 10:1 - 1:1, insbesondere 5:1 - 1.5:1, ist.

Ein Verhältnis von a/(b+c) ist insbesondere ebenfalls gleich 10:1 - 1:1, speziell 5:1 - 1.5:1.

In einem weiteren Aspekt bezieht sich die Erfindung auf eine Zusammensetzung, insbesondere eine Mörtelzusammensetzung, eine Betonzusammensetzung oder eine zementöse Zusammensetzung, enthaltend mindestens ein wie vorstehend beschriebenes Kammpolymer **KP** sowie ein mineralisches Bindemittel. Das mineralische Bindemittel ist vorzugsweise ein hydraulisches Bindemittel, insbesondere Zement, bevorzugt Portlandzement.

Unter dem Ausdruck "mineralisches Bindemittel" ist insbesondere ein Bindemittel zu verstehen, welches in Anwesenheit von Wasser in einer Hydratationsreaktion zu festen Hydraten oder Hydratphasen reagiert. Dies kann beispielsweise ein hydraulisches Bindemittel (z.B. Zement oder hydraulischer Kalk), ein latent hydraulisches Bindemittel (z.B. Schlacke), ein puzzolanisches Bindemittel (z.B. Flugasche) oder ein nicht hydraulisches Bindemittel (Gips oder Weisskalk) sein. Unter einem "zementösen Bindemittel" wird vorliegend insbesondere ein Bindemittel oder eine Bindemittelzusammensetzung mit einem Anteil von wenigstens 5 Gew.-%, insbesondere wenigstens 20 Gew.-%, bevorzugt wenigstens 35 Gew.-%, im Speziellen wenigstens 65 Gew.-%, Zementklinker verstanden. Der Zementklinker ist bevorzugt ein Portlandzementklinker. Mit Zementklinker ist im vorliegenden Zusammenhang insbesondere gemahlener Zementklinker gemeint.

Insbesondere enthält das mineralische Bindemittel oder die Bindemittelzusammensetzung ein hydraulisches Bindemittel, bevorzugt Zement. Besonders bevorzugt ist ein Zement mit einem Zementklinkeranteil von ≥ 35 Gew.-%. Insbesondere ist der Zement vom Typ CEM I, CEM II und/oder CEM IIIA (gemäss Norm EN 197-1). Ein Anteil des hydraulischen Bindemittels am gesamten mineralischen Bindemittel beträgt mit Vorteil wenigstens 5 Gew.-%, insbesondere wenigstens 20 Gew.-%, bevorzugt wenigstens 35 Gew.-%, im Speziellen wenigstens 65 Gew.-%. Gemäss einer weiteren vorteilhaften Ausführungsform besteht das mineralische Bindemittel zu ≥ 95 Gew.-% aus hydraulischem Bindemittel, insbesondere aus Zementklinker.

Es kann aber auch vorteilhaft sein, wenn das Bindemittel oder die Bindemittelzusammensetzung andere Bindemittel enthält oder daraus besteht. Dies sind insbesondere latent hydraulische Bindemittel und/oder puzzolanische Bindemittel. Geeignete latenthydraulische und/oder puzzolanische Bindemittel sind z.B. Schlacke, Flugasche und/oder Silicastaub. Ebenso kann die Bindemittelzusammensetzung inerte Stoffe wie z.B. Kalkstein, Quarzmehle und/oder Pigmente enthalten. In einer vorteilhaften Ausführungsform enthält das mineralische Bindemittel 5 - 95 Gew.-%, insbesondere 5 - 65 Gew.-%, besonders bevorzugt 15 - 35 Gew.-%, latenthydraulische und/oder puzzolanische Bindemittel. Vorteilhafte latenthydraulische und/oder puzzolanische Bindemittel sind Schlacke und/oder Flugasche.

In einer besonders bevorzugten Ausführungsform enthält das mineralische Bindemittel ein hydraulisches Bindemittel, insbesondere Zement oder Zementklinker, und ein latenthydraulisches und/oder puzzolanisches Bindemittel, bevorzugt Schlacke und/oder Flugasche. Der Anteil des latenthydraulischen und/oder puzzolanischen Bindemittels beträgt dabei besonders bevorzugt 5 - 65 Gew.-%, besonders bevorzugt 15 - 35 Gew.-%, während wenigstens 35 Gew.-%, im Speziellen wenigstens 65 Gew.-%, des hydraulischen Bindemittels vorliegen.

Das Kammpolymer **KP** verfügt an der Zusammensetzung im Besonderen über einen Anteil von 0.001 - 10 Gew.-%, insbesondere 0.01 - 5 Gew.-%, bezogen auf das mineralische Bindemittel.

Weiter bezieht sich die Erfindung auf eine wässrige Zusammensetzung enthaltend mindestens ein wie vorstehend beschriebenes Kammpolymer **KP.** Ein Anteil des Kammpolymers **KP,** bezogen auf das Gesamtgewicht der wässrigen Zusammensetzung, beträgt dabei insbesondere 10 - 90 Gew.-%, bevorzugt 20 - 50 Gew.-%.

In einer bevorzugten Ausführungsform stellt die vorliegende Erfindung ein Kammpolymer **KP-1,** bestehend aus den Teilstruktureinheiten **S1** und **S3** mit folgenden Eigenschaften bereit:

$$a/c=1/(0.2 - 3) \text{ und } b = 0,$$

$R^u = R^v = H$, $R^3 = CH_3$, $R^4 = H$, $R^5 = CH_3$ ist,

M = H oder Na

Z für Sauerstoff steht und

x = 1 bis 4, y = 20 bis 30 und w = 0 ist.

In einer weiteren, bevorzugten Ausführungsform, stellt die vorliegende Erfindung ein Kammpolymer **KP-2,** bestehend aus den Teilstruktureinheiten **S1, S2,** und **S3** mit folgenden Eigenschaften bereit:

$$a/b/c = 1/(0.1 - 1.5)/(0.1 - 1.5)$$

$R^u = R^v = H$, $R^1 =(CH_2CH_2O)_nCH_3$, n = 23 - 26

$R^3 = CH_3$, $R^4 = H$ und $R^5 = CH_3$,

M = H oder Na

Z für Sauerstoff steht und

x = 1 bis 4, y = 20 bis 30 und w = 0 ist.

In einer anderen bevorzugten Ausführungsform, stellt die vorliegende Erfindung ein Kammpolymer **KP-3,** bestehend aus den Teilstruktureinheiten **S1** und **S3** mit folgenden Eigenschaften bereit:

$$a/c = 1/(0.2 - 3) \text{ und } b = 0,$$

wobei

$R^u = R^v = H$, $R^3 = CH_3$, $R^4 = H$, und $R^5 = CH_3$ ist,

M = H oder Na

Z = N-$CH_3$ bedeutet,

x = 1, y = 20 bis 30 und w = 0 ist.

In einer weiteren, bevorzugten Ausführungsform, stellt die vorliegende Erfindung ein Kammpolymer **KP-4,** bestehend aus den Teilstruktureinheiten **S1, S2,** und **S3** mit folgenden Eigenschaften bereit:

$$a/b/c = 1/(0.1 -1.5)/(0.1 - 1.5),$$

worin

$R^u = R^v = H$, $R^1 =(CH_2CH_2O)_nCH_3$ und n = 23 - 26

$R^3 = CH_3$, $R^4 = H$, $R^5 = CH_3$ ist,

M = H oder Na ist,

Z = N-$CH_3$, und

x = 1, y = 20 bis 30 und w = 0 ist.

Weitere Aspekte der vorliegenden Erfindung betreffen verschiedene Verwendungen eines wie vorstehend definierten Kammpolymers **KP** im Zusammenhang mit mineralischen Bindemitteln. Wie sich gezeigt hat, sind die Kammpolymere **KP** insbesondere für folgende Verwendungen oder Zwecke geeignet:

- Verwendung eines Kammpolymers **KP** als Fliessmittel für mineralische Bindemittel, insbesondere für hydraulisch abbindende Bindemittel, bevorzugt zementöse Bindemittel, besonders bevorzugt für Portlandzement.

- Verwendung eines Kammpolymers **KP** in einer Zusammensetzung enthaltend ein mineralisches Bindemittel zur Verlängerung der Verarbeitungszeit. Dies insbesondere bei hydraulisch abbindenden Bindemitteln, bevorzugt zementöse Bindemittel, insbesondere Portlandzement.

- Verwendung eines Kammpolymers **KP** in einer Zusammensetzung enthaltend ein mineralisches Bindemittel zur Verbesserung der Verarbeitbarkeit. Dies insbesondere bei hydraulisch abbindenden Bindemitteln, bevorzugt zementöse Bindemittel, insbesondere Portlandzement.

- Verwendung eines Kammpolymers **KP** als Mahlhilfsmittel für anorganische Feststoffe, insbesondere mineralische Bindemittel oder Füllstoffe. Beispielsweise Zement, Kalk, Schlacke und/oder Gips.

Weiter betrifft die vorliegende Erfindung Verfahren zur Herstellung der Kammpolymere **KP.**
Ein erstes und im Folgenden auch als "Polymeranaloges Verfahren" genanntes Verfahren zur Herstellung eines wie vorstehend beschriebenen Kammpolymers **KP** umfasst die Schritte:

a) Bereitstellen und/oder Herstellen eines Basispolymers **BP** umfassend oder bestehend aus einer Struktureinheit der Formel IV

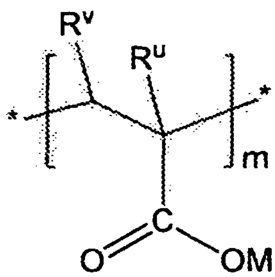

(IV)

wobei

M, $R^u$ und $R^v$ wie vorstehend definiert sind, und

m > 2, insbesondere m = 20 - 100 ist;

b) Veresterung des Basispolymers **BP** mit einer Verbindung der Formel V

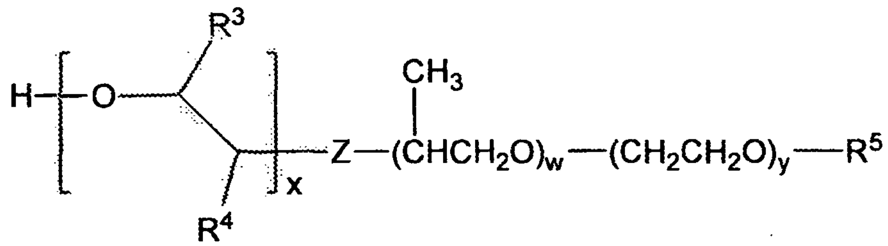

(V)

sowie optional einer Verbindung der Formel VI

$HO\text{-}R^1$ (VI)

zum Kammpolymer **KP,**
wobei $R^1$, $R^2$, $R^3$, $R^4$, $R^5$, x, y, w und n wie in Anspruch 1 definiert sind.

Das Basispolymer **BP** in Schritt a) ist insbesondere eine Polyacrylsäure, eine Polymethacrylsäure und/oder ein Copolymer aus Acrylsäure und Methacrylsäure. Ein zahlengemitteltes Molekulargewicht ($M_n$) des Basispolymers **BP** der Formel (I) ist insbesondere gleich 500 - 20'000 g/mol, insbesondere 500 - 10'000 g/mol, weiter bevorzugt 3'000 - 5'000 g/mol.

Derartige Basispolymere **BP** lassen sich in an sich bekannter Weise aus Acrylsäuremonomeren und/oder Methacrylsäuremonomeren herstellen. Es ist aber beispielsweise auch möglich, Maleinsäuremonomere und/oder Maleinsäureanhydridmonomere einzusetzen. Dies kann unter anderem aus ökonomischen und sicherheitstechnischen Aspekten vorteilhaft sein.

Das Basispolymer **BP** wird in Schritt a) insbesondere durch wässrige radikalische Polymerisation, beispielsweise von Acrylsäure und/oder Methacrylsäure, in Gegenwart eines Radikalinitiators und/oder eines Molekulargewichtsreglers hergestellt.

Der Radikalinitiator in Schritt a) umfasst insbesondere Na-, K- oder Ammoniumperoxodisulfat. Ebenfalls geeignet als Radikalinitiator in Schritt a) ist z.B. ein Redoxpaar auf Basis von $H_2O_2$ / $Fe^{2+}$.

Bevorzugt ist der Molekulargewichtsregler in Schritt a) ein Alkalisulfit oder Hydrogensulfit. Ebenfalls vorteilhaft ist ein Phosphinsäurederivat. Der Molekulargewichtsregler in Schritt a) kann auch eine organische Verbindung sein, welche eine Thiolgruppe enthält.

Entsprechende Basispolymere **BP** können grundsätzlich auch bei verschiedenen Anbietern kommerziell bezogen werden.

Zur Veresterung in Schritt b) können unter anderem Säuren und/oder Basen, beispielsweise als Katalysatoren, beigegeben werden. Mit Vorteil erfolgt die Veresterung bei erhöhten Temperaturen von 120 - 200°C, insbesondere 160 - 180°C. Dadurch kann die Ausbeute signifikant verbessert werden.

Die in Schritt b) eingesetzten Verbindungen der Formeln V mit Z = Sauerstoff sind kommerziell erhältlich (z.B. Sigma-Aldrich Chemie GmbH, Schweiz) oder lassen sich durch Addition von Propylenoxid an ein einseitig $R^5$-terminiertes Polyethylenoxid in an sich bekannter Weise herstellen. Das $R^5$-terminierte Polyethylenoxid ist wiederum in bekannter Weise durch Anlagerung von Ethylenoxideinheiten an einen Alkohol der Formel $HO\text{-}R^5$ erhältlich.

Zur Herstellung von Verbindungen der Formeln V mit Z = $N\text{-}R^6$ kann ein $R^5$-terminiertes Polyethylenoxid mit Ammoniak oder einer Verbindung der Formel $H_2N\text{-}R^6$ umgesetzt werden. Dies beispielsweise in Gegenwart von Wasserstoff und/oder einem Metallkatalysator bei erhöhter Temperatur. Dabei entsteht aus der endständigen OH-Gruppe eine endständige Aminogruppe mit $R^6$-Substituent. Entsprechende Polyetheramine sind teilweise auch kommerziell erhältlich, z.B. unter dem Handelsnamen Jeffamin (Huntsman Corporation, USA). Anschliessend erfolgt eine an sich bekannte Umsetzung mit Propylenoxid zur Verbindung V.

Ebenfalls möglich ist eine Umsetzung eines $R^5$-terminierten Polyethylenoxids mit Ammoniak, wobei aus der endständigen OH-Gruppe des Polyethylenoxids eine endständige Aminogruppe gebildet wird. Zur Einführung des Rests $R^6$ (falls ungleich H) an der endständigen Aminogruppe erfolgt anschliessend insbesondere eine Umsetzung mit einem Aldehyd der Formel $H\text{-}C(=O)\text{-}R^6$. Anschliessend kann die so erhaltene Verbindung wiederum in bekannter Weise mit Propylenoxid zur Verbindung V umgesetzt werden.

Die in Schritt b) eingesetzten Verbindungen der Formeln VI sind kommerziell bei verschiedenen Anbietern erhältlich.

Ein zweites und im Folgenden auch "Copolymerisationsverfahren" genanntes Verfahren zur Herstellung eines wie vorstehend beschriebenen Kammpolymers **KP** umfasst eine Copolymerisation von:

a Molanteilen von Monomeren **M1** der Formel VII

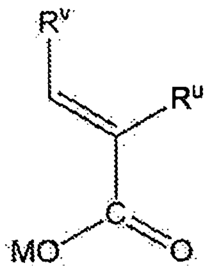

(VII)

b Molanteilen von Monomeren **M2** der Formel VIII

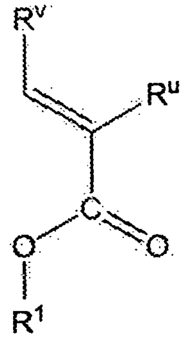

(VIII)

c Molanteilen von Monomeren **M3** der Formel IX

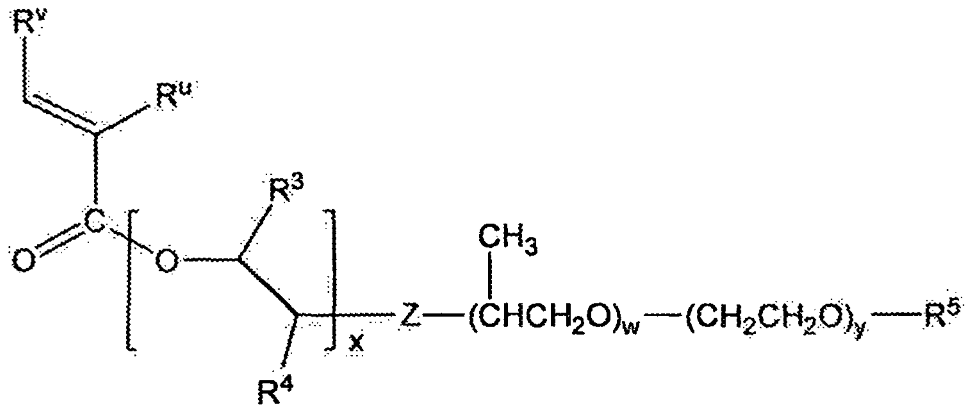

(IX)

wobei a, b, und c die Molanteile der jeweiligen Momomere **M1**, **M2** und **M3** darstellen,
ein Molanteilverhältnis a/b/c = (0.1 - 0.9) / (0 - 0.4) / (0.1 - 0.9) ist und mit der Massgabe dass a + b + c = 1 ist,
wobei M, $R^u$, $R^v$, $R^1$, $R^2$, $R^3$, $R^4$, $R^5$, x, y, w und n wie vorstehend definiert sind.

Die Monomere **M2** und **M3** können in an sich bekannter Weise durch Veresterung von Acrylsäure, Methacrylsäure, Maleinsäure und/oder Maleinsäureanhydrid mit Verbindungen gemäss Formeln V und VI (siehe oben) hergestellt werden.

Für die Copolymerisation oder das zweite Verfahren können die bereits vorstehend im Zusammenhang mit dem ersten Verfahren genannten Radikalinitiatioren und/oder Molekulargewichtsregler eingesetzt werden.

Wie sich gezeigt hat, sind die nach dem ersten Verfahren hergestellten Kammpolymere im Hinblick auf eine Verlängerung der Verarbeitbarkeit von mineralischen Bindemittelzusammensetzungen signifikant wirksamer als entsprechende nach dem zweiten Verfahren (Copolymerisation) hergestellten Kammpolymere.

In weiteren Aspekten betrifft die Erfindung eine Verbindung der Formel V mit Z = N-$R^6$ sowie eine Verbindung der Formel IX mit Z = N-$R^6$. Diese Verbindungen sind als Zwischenprodukte oder Ausgangsmaterialen für die Herstellung der erfindungsgemässen Kammpolymere KP in den vorstehend beschriebenen Verfahren einsetzbar. $R^u$, $R^v$, $R^3$, $R^4$, $R^5$, $R^6$, x, y und w sind dabei wie vorstehend definiert. Bevorzugt sind $R^u$ = $R^v$ = H, x = 1, $R^3$ = $CH_3$; $R^4$ = H und/oder $R^5$ eine Alkylgruppe mit 1 - 20 Kohlenstoffatomen. Insbesondere ist $R^5$ = $CH_3$. $R^6$ ist insbesondere eine Alkylgruppe mit 1 - 20 Kohlenstoffatome. Besonders bevorzugt ist $R^6$ = $CH_3$. Gemäss einer vorteilhaften Ausführungsform sind y = 10

- 70, insbesondere 20 - 30, und/oder w = 0.

**Ausführungsbeispiele**

1. Messmethoden

Flüssigchromatographiemessungen wurden mit einem ACQUITY UPLC der Firma Waters Corporation unter Verwendung eines ELS- und PDA-Detektors sowie einer BEH 300 C18, 2.1 x 100 mm, 1.7μm-Säule mit 0.15%-iger Ameisensäure als Laufmittel A und Acetonitril als Laufmittel B durchgeführt.

Molekulargewichtsbestimmungen erfolgten durch Gel-Permeationschromatographie (GPC) mit wässrigen Elutionsmitteln. Ein eng kalibrierter Natrium-polyacrylatstandard diente als Kalibrierung. Als Elutionsmittel wurde eine 0.1m-Natriumnitrat-Lösung vom pH = 12 verwendet. Der isokratische Fluss betrug 0.8 ml/min. IGPC-Säule: Varian Ultrahydrogel 7.8 x 300 mm. Die Peaks wurden mittels eines Differentialrefraktometers Varian RI-4 und eines UV-Detektors Waters SAT/IN-Module quantifiziert.

2. Verwendete Materialien

Für die Herstellung der Polymeren wurden nebst anderen die folgenden Ausgangsmaterialien verwendet:

- SOKALAN PA 25CL PN: Ca.50 %-ige, partiell neutralisierte Polyacrylsäure in Wasser. Mittlere Molmasse $M_w$ = 4000 g/mol Das Produkt ist bei BASF (Deutschland) kommerziell erhältlich.

- MPEG 1000: Polyethylenglykol-monomethylether mit mittlerer Molmasse 1000 g/mol. Ethylenoxid(EO)-Gehalt: 23 bis 26 EO-Gruppen/Mol.

- RMB 5090: Ein mit 1 bis 4 Oxypropyleneinheiten endterminiertes Monomethylpolyethylenglykol mit einer mittleren Molmasse von ca. 1000 g/mol und einem EO-Gehalt von 23 bis 26 EO-Gruppen/Mol. RMB 5090 ist ein Produkt der Firma INEOS.

- PEA1065: Ein N-(Polyoxyethylen)-N-(methyl)-aminoalkohol der mittleren Molmasse von ca. 1065 g/mol der Formel X

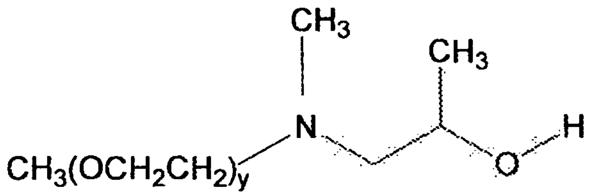

(X)

mit y = 23 bis 26 .
PEA 1065 ist ein Laborversuchsprodukt. Die Herstellung erfolgt dadurch, dass man MPEG 1000 mit Methylamin in Gegenwart von Wasserstoff und einem Metallkatalysator bei erhöhter Temperatur und erhöhtem Druck zum Polyetheramin und dieses anschliessend mit einem Mol Propylenoxid umsetzt.

- IRGANOX 1010: Ein Stabilisator für Polyalkylenglykole, erhältlich bei Ciba Specialty Chemicals (Schweiz).

- RONGALIT: Na-Hydroxymethan-sulfinat. Erhältlich bei BASF (Deutschland).

3. Herstellungsbeispiele für Kammpolymere

3.1 **KP-1** (Polymeranaloge Veresterung)

Kammpolymer **KP-1,** bestehend aus Teilstruktureinheiten **S1** und **S3** im Molverhältnis von ca. 1/0.57, hergestellt durch polymeranaloge Veresterung einer Polyacrylsäure der Molmasse von ca. 4000g/Mol mit RMB 5090. Veresterungsgrad: 36.5 %, bezogen auf Carboxylgruppen.

In einem 2 Liter fassenden 4-Halsrundkolben mit mechanischem Rührer, Thermometer, Gaseinleitungsrohr und Destillationsbrücke wurden 320g SOKALAN PA 25 CL-PN (entspricht etwa 2 Mol Carboxylgruppen), 8g 50%-ige Schwefelsäure, 14g p-Toluolsulfonsäure und 0.4g IRGANOX 1010 vorgelegt. Nach Erwärmen auf 50°C wurden nun

rasch 800g (ca.0.730 Mol) RMB 5090 zugegeben und das Gemisch innerhalb von 45 Minuten unter Stickstoff auf 165°C erwärmt und 30 Minuten bei 165°C gehalten. Danach wird 8g 50%-ige Natronlauge zugegeben und anschliessend die Temperatur auf 180°C gesteigert unter gleichzeitigem Anlegen eines Vakuums von 80mBar, wobei ein homogenes Rektionsgemisch entstand. Diese Rektionslösung wurde nun innerhalb von 4 Stunden bei 180°C gehalten, wobei der Innendruck auf 70mBar fiel. Anschliessend wurde die Temperatur noch 3 Stunden bei 180°C gehalten und das Fortschreiten der Reaktion mittels Flüssigchromatographie kontrolliert wobei der Reaktionsumsatz nach Erreichen von 91.5% konstant blieb.

Nach dem Abkühlen auf 90°C wurden 600g der Schmelze durch Einrühren in 900g Wasser in eine klare Lösung überführt. Feststoffgehalt:39.9% 3.2 **KP-2** (Polymeranaloge Veresterung)

Kammpolymer KP-2, bestehend aus Teilstruktureinheiten **S1, S2** und **S3** im Molverhältnis von ca. 1/0.30/0.30, hergestellt durch polymeranaloge Veresterung einer Polyacrylsäure der Molmasse von ca. 4000g/Mol mit MPEG 1000 (0.36 Mol) und RMB 5090 (0.36mol). Veresterungsgrad: 36.5% bezogen auf Carboxylgruppen.

In einem 2 Liter fassenden 4-Halsrundkolben mit mechanischem Rührer, Thermometer, Gaseinleitungsrohr und Destillationsbrücke wurden 320g SOKALAN PA 25 CL-PN (entspricht etwa 2 Mol Carboxylgruppen), 8g 50%-ige Schwefelsäure, 14g p-Toluolsulfonsäure und 0.4g IRGANOX 1010 vorgelegt. Nach Erwärmen auf 50°C wurden nun rasch 360g (ca. 0.36 mol) MPEG 1000 und 400g (ca. 0.36 mol) RMB 5090 zugegeben und das Gemisch innerhalb von 45 Minuten unter Stickstoff auf 165°C erwärmt und 30 Minuten bei 165°C gehalten. Danach wird 8g 50%-ige Natronlauge zugegeben und anschliessend die Temperatur auf 180°C gesteigert unter gleichzeitigem Anlegen eines Vakuums von 80mBar, wobei ein homogenes Rektionsgemisch entstand. Diese Rektionslösung wurde nun 3.5 Stunden bei 180°C gehalten wobei der Innendruck auf 70mBar fiel. Anschliessend wurde die Temperatur noch 3 Stunden bei 180°C gehalten und das Fortschreiten der Reaktion mittels Flüssigchromatographie kontrolliert wobei der Reaktionsumsatz nach Erreichen von 92% konstant blieb.

Nach dem Abkühlen auf 90°C wurden 600 g der Schmelze durch Einrühren in 900g Wasser in eine klare Lösung vom Polymergehalt 92% überführt. Feststoffgehalt: 40.2%.

3.3 **KP-3** (Polymeranaloge Veresterung)

Kammpolymer **KP-3,** bestehend aus Teilstruktureinheiten **S1** und **S3** im Molverhältnis von ca.1/0.57, hergestellt durch polymeranaloge Veresterung einer Polyacrylsäure der Molmasse von ca. 4000 g/mol mit PEA 1065,. Veresterungsgrad: 36.5 %, bezogen auf Carboxylgruppen.

In einem 2 Liter fassenden 4-Halsrundkolben mit mechanischem Rührer, Thermometer, Gaseinleitungsrohr und Destillationsbrücke wurden 320g SOKALAN PA 25 CL-PN (entspricht etwa 2 Mol Carboxylgruppen), 8g 50%-ige Schwefelsäure, 14g p-Toluolsulfonsäure und 0.4g IRGANOX 1010 vorgelegt. Nach Erwärmen auf 50°C wurden nun rasch 775g (ca. 0.73 mol) PEA1065 zugegeben und das Gemisch innerhalb von 45 Minuten unter Stickstoff auf 165°C erwärmt und 30 Minuten bei 165°C gehalten Anschliessend wurde die Temperatur auf 180°C gesteigert unter gleichzeitigem Anlegen eines Vakuums von 80mBar, wobei ein homogenes Rektionsgemisch entstand. Diese Rektionslösung wurde nun während 3 Stunden bei 180°C gehalten wobei der Innendruck auf 70 mBar fiel. Anschliessend wurde noch 2 Stunden bei 180°C nachreagiert und das Fortschreiten der Reaktion mittels Flüssigchromatographie kontrolliert wobei der Reaktionsumsatz nach Erreichen von 91. % konstant blieb.

Nach dem Abkühlen auf 90°C wurden 600g der Schmelze durch Einrühren in 900g Wasser in eine klare Lösung überführt. Feststoffgehalt:40 %.

3.3 **KP-4** (Polymeranaloge Veresterung)

Kammpolymer **KP-4,** bestehend aus Teilstruktureinheiten **S1, S2** und **S3** im Molverhältnis von ca.1/0.29/0.29, hergestellt durch polymeranaloge Veresterung einer Polyacrylsäure der Molmasse von ca. 4000 g/mol mit MPEG 1000 (0.4 mol) und PEA 1065 (0.4 mol). Veresterungsgrad: 36.5% bezogen auf Carboxylgruppen.

In einem 2 Liter fassenden 4-Halsrundkolben mit mechanischem Rührer, Thermometer, Gaseinleitungsrohr und Destillationsbrücke wurden 320g SOKALAN PA 25 CL-PN (entspricht etwa 2 Mol Carboxylgruppen), 8 g 50%-ige Schwefelsäure, 14g p-Toluolsulfonsäure und 0.4g IRGANOX 1010 vorgelegt. Nach Erwärmen auf 50°C wurden nun rasch 360 g (ca. 0.36 mol) MPEG 1000 und 383 g (ca. 0.36 mol) PEA 1065 zugegeben und das Gemisch innerhalb von 45 Minuten unter Stickstoff auf 165°C erwärmt und 30 Minuten bei 165°C gehalten. Danach wird die Temperatur auf 180°C gesteigert unter gleichzeitigem Anlegen eines Vakuums von 80 mBar, wobei ein homogenes Rektionsgemisch entstand. Diese Rektionslösung wurde nun innerhalb von 3.5 Stunden bei 180°C gehalten wobei der Innendruck auf 70 mBar fiel.

Anschliessend wurde die Temperatur noch 2 Stunden bei 180°C gehalten und das Fortschreiten der Reaktion mittels Flüssigchromatographie kontrolliert wobei der Reaktionsumsatz nach Erreichen von 92% konstant blieb.

Nach dem Abkühlen auf 90°C wurden 600 g der Schmelze durch Einrühren in 900 g Wasser in eine klare

Lösung vom Polymergehalt 92% überführt. Feststoffgehalt : 40%

3.5 Kammpolymer **KP-5** (Copolymerisation)

Kammpolymer **KP-5,** bestehend aus Teilstruktureinheiten **S1** und **S3** im Molverhältnis von ca. 1/0.57, hergestellt durch radikalische Copolymerisation von Acrylsäure (1.27 mol) und RMB 5090-Acrylat (0.75 mol).

*1) Monomergemisch 1*

Herstellung eines Monomerengemisches von Acrylsäure und RMB5090-acrylat.

| | | |
|---|---|---|
| Ansatz 1: | RMB 5090 | 800 g (0.75 mol) |
| | Acrylsäure | 144 g (2 mol) |
| | p-Toluolsulfonsäure | 15g |
| | Phenothiazin | 0.5 g |
| | Toluol | 350 g |

In einem 2 Liter fassenden 3-Halsrundkolben mit Rührer, Thermometer und Wasserabscheider wurde der gesamte Ansatz 1 vorgelegt und innerhalb von. 30 Minuten auf 126°C erwärmt. Nun wurde die Temperatur des Veresterungsgemisches innerhalb 35 Minuten auf 130°C erhöht und diese Temperatur unter leichtem Rückfluss während 12.5 Stunden gehalten bis kein Wasser mehr abgeschieden wurde (total 14.5 ml). Mittels HPLC wurde ein Endgehalt des Monomerengemisches von 95% Ester, bezogen auf RMB 5090 bestimmt.

*2) Copolymerisation zum Kammpolymer KP-5*

| | |
|---|---|
| Vorlage 1: | 200 g Wasser |
| 6 g | Wasserstoffperoxid (35%-ig) |

| | |
|---|---|
| Zulauf 1: | 320 g Monomerengemisch 1 |
| | 80 g Wasser |
| | 3g Rongalit |
| | 0.1 g Eisen-(II)-sulfat-Heptahydrat |

In einem 1 Liter fassenden 3-Halsglaskolben mit Thermometer und Rührer wurde Vorlage 1 bei Raumtemperatur vorgelegt und dann in 60 Minuten Zulauf 1 mittels einer Dosierpumpe zudosiert wobei die Temperatur von 21 °C auf 41°C anstieg.

Anschliessend wurde noch 30 Minuten gerührt und dann das Reaktionsprodukt in einen Scheidetrichter gegeben. Die obere Phase (Toluol) wurde abgetrennt und die untere wässrige Phase am Rotationsverdampfer vom restlichen Toluol befreit.

Es wurde eine wässrige Lösung des Kammpolymers **KP-5** erhalten, die durch Zugabe von Wasser auf einen Feststoffgehalt von 40% eingestellt wurde.

3.6 Vergleichsbeispiel **V1**

Kammpolymer **V1**, bestehend aus Teilstruktureinheiten **S1** und **S2** im Molverhältnis von ca. 1/0.57, hergestellt durch polymeranaloge Veresterung einer Polyacrylsäure der Molmasse von ca. 4000 g/mol mit MPEG 1000. Veresterungsgrad: 43%, bezogen auf Carboxylgruppen.

In einem 2 Liter fassenden 4-Halsrundkolben mit mechanischem Rührer, Thermometer, Gaseinleitungsrohr und Destillationsbrücke wurden 320 g SOKALAN PA 25 CL-PN (entspricht etwa 2 mol Carboxylgruppen), 8g 50%-ige Schwefelsäure, 14g p-Toluolsulfonsäure und 0.4g IRGANOX 1010 vorgelegt. Nach Erwärmen auf 50°C wurden nun rasch 860g (ca.0.86 Mol) MPEG 1000 zugegeben und das Gemisch innerhalb von 45 Minuten unter Stickstoff auf 165°C erwärmt und 30 Minuten bei 165°C gehalten. Danach wurden 8g 50%-ige Natronlauge zugegeben und anschliessend

die Temperatur auf 180°C gesteigert unter gleichzeitigem Anlegen eines Vakuums von 80mBar, wobei ein homogenes Reaktionsgemisch entstand. Diese Reaktionslösung wurde nun während 2 Stunden bei 180°C gehalten wobei der Innendruck auf 70 mbar fiel. Anschliessend wurde noch 1.5 Stunden bei 180°C nachreagiert und das Fortschreiten der Reaktion mittels Flüssigchromatographie kontrolliert wobei der Reaktionsumsatz nach Erreichen von 92% konstant blieb.

Nach dem Abkühlen auf 90°C wurden 600g der Schmelze durch Einrühren in 900g Wasser in eine klare Lösung überführt. Feststoffgehalt:40.2 %.

3.7 Vergleichsbeispiel **V2**

40%-Polyacrylsäure mit Molmasse von ca. 4000 g/mol in Form eines teilneutralisierten Na-Salzes.

Hierfür wurden 100 g SOKALAN PA 25CL PN mit 25 g Wasser verdünnt.

4. Frischmörtelversuche

4.1 Herstellung von Frischmörtelproben

Um die Wirksamkeit der erfindungsgemässen Kammpolymeren **KP-1** bis **KP-5** nachzuweisen, wurden Frisch-Zementmörtel welche jeweils gleiche Mengen von 40%-igen Lösungen dieser Polymeren oder Vergleichspolymere enthielten, hergestellt.

Konkret wurden Frischmörtelzusammensetzungen mit den in Tabelle 1 angegebenen Spezifikationen hergestellt.

*Tabelle 1: Frischmörtelzusammensetzung*

| **Bestandteile** | **Menge in g** |
|---|---|
| Portlandzement, Typ 1 | 1000 |
| Kalksteinfiller | 200 |
| Feinsand, 0 - 1.2 mm[1)] | 1267 |
| Sand, 1.2 - 4 mm[1)] | 1067 |
| Sand, 4 - 8 mm[1)] | 1667 |
| Gesamter Wassergehalt (Mischwasser + Wasser der Polymerlösung) | 420 |
| Erfindungsgemässes Polymer oder Vergleichspolymer (40%-ige-Lösung)[2)] | 7 |

[1)] gewaschen und getrocknet
[2)] Alle Polymerlösungen wurden mit 0.1 % Triisobutylphosphat entschäumt Filler, Sand und Zement wurden dabei in einem Hobart-Mörtelmischer 60 Sekunden gemischt. Anschliessend wurde die im Anmachwasser gelöste 40%-ige Polymerlösung hinzugefügt und der Mörtel während 3 Minuten maschinell gemischt.

4.2 Zeitabhängiges Ausbreitmass

Das Fliessverhalten der Frischmörtelzusammensetzungen wurde mit Hilfe eines "Setztischausbreitungs"-Tests gemäss DIN 18555,Teil 2 bestimmt.

Die Durchmesser des ausgebreiteten Mörtels wurden in zwei Richtungen gemessen und der Durchschnittswert als Ausbreitwert genommen. Der Messvorgang wurde nach 60, 120 und 180 Minuten, jeweils nach 30 Sekunden langem Mischen, wiederholt.

Das zeitabhängige Fliessmass des Mörtels ist ein Mass für dessen zeitabhängige Verarbeitbarkeit oder die Verarbeitbarkeitsdauer. Die Konsistenz von frisch zubereitetem Mörtel, d.h. die Mobilität und Viskosität sind die wichtigsten Eigenschaften bezüglich der Verarbeitbarkeit.

Tabelle 2 gibt einen Überblick über das zeitabhängige Ausbreitmass der verschiedenen Frischmörtelproben.

*Tabelle 2: Zeitabhängiges Ausbreitmass der verschiedenen Frischmörtelproben. Der Anteil an Polymer ist dabei auf den Zementgehalt der Frischmörtelzusammensetzung bezogen. W/Z gibt das Gewichtsverhältnis von Wasser zu Zement an.*

| **Nr.** | **Polymer** | **W/Z** | **Anteil Polymer [Gew.-%]** | **Ausbreitmass in mm, x Minuten nach dem Anmachen** | | | |
|---|---|---|---|---|---|---|---|
| | | | | **x = 0** | **x = 60** | **x = 120** | **x = 180** |
| **P1** | **KP-1** | 0.42 | 0.7 | 210 | 234 | 222 | 180 |
| **P2** | **KP-2** | 0.42 | 0.7 | 212 | 230 | 200 | 160 |
| **P3** | **KP-3** | 0.42 | 0.7 | 214 | 240 | 225 | 180 |
| **P4** | **KP-4** | 0.42 | 0.7 | 205 | 233 | 218 | 165 |
| **P5** | **KP-5** | 0.42 | 0.7 | 210 | 228 | 200 | 155 |
| **P6** | **V1** | 0.42 | 0.7 | 206 | 226 | 164 | n.m. |
| **P7** | **V2** | 0.42 | 0.7 | 171 | n.m. | n.m. | n.m. |
| n.m. = nicht messbar, da zu viskos | | | | | | | |

Aus Tabelle 2 ist insbesondere ersichtlich, dass die Frischmörtelzusammensetzungen **P1 - P5,** welche allesamt erfindungsgemässe Kammpolymere enthalten, bis zu 180 Minuten verarbeitbar bleiben. Dies im Gegensatz zu den Proben **P6** und **P7,** welche herkömmliche Polymere enthalten.

Die besten Ergebnisse werden dabei mit der Probe **P3** bzw. Kammpolymer **KP-3** mit Seitenketten auf der Basis des Polyoxyethylen-N-(methyl)-aminoalkhols (PEA 1065) erreicht. Das Kammpolymer **KP-3** schneidet sogar noch besser ab als Kammpolymer **KP-1,** welches über Seitenketten auf Basis eines Oxypropylenterminierten-Monomethypolyethylenglykols (RMB 5090) verfügt.

Zu erkennen ist auch, dass bei den Proben **P2** und **P4** mit den Kammpolymeren **KP-2** bzw. **KP-4** die Viskosität insbesondere nach 120 und 180 Minuten stärker zunimmt als bei den Proben **P1** und **P3.** Dies ist insbesondere auf die geringere Anzahl von **S3**-Teilstruktureinheiten in den Kammpolymeren **KP-2** und **KP-4** zurückzuführen. Dies belegt die Relevanz der Teilstruktureinheiten **S3** in den erfindungsgemässen Kammpolymeren.

Auffallend ist auch, dass das durch Copolymerisation hergestellte Kammpolymer **KP-5** gegenüber dem polymeranalog hergestellten Kammpolymer **KP-1** etwas schlechter abschneidet. Polymeranalog hergestellte Kammpolymere unterscheiden sich somit von entsprechenden durch Compolymerisation hergestellten Kammpolymeren.

Da ein enger Zusammenhang zwischen dem Fliessverhalten von Frischmörtel und Frischbeton besteht, sind die erhaltenen Resultate im Wesentlichen auf Frischbeton übertragbar.

Die vorstehend beschriebenen Ausführungsformen sind jedoch lediglich als illustrative Beispiele zu verstehen, welche im Rahmen der Erfindung beliebig abgewandelt werden können.

## Patentansprüche

**1.** Kammpolymer KP umfassend oder bestehend aus:

a Molanteilen einer Teilstruktureinheit **S1** der Formel I

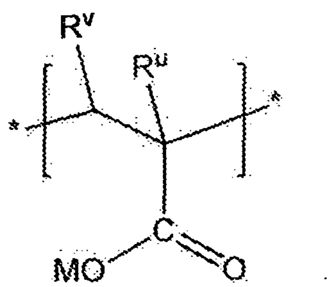

(I)

b Molanteilen einer Teilstruktureinheit **S2** der Formel II

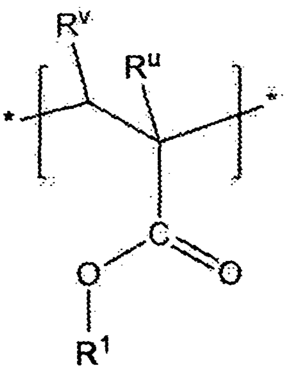

(II)

c Molanteilen einer Teilstruktureinheit **S3** der Formel III

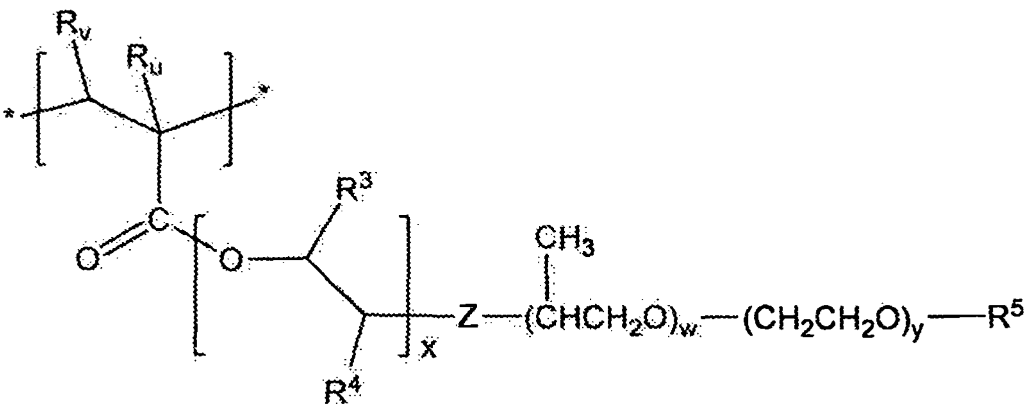

(III)

wobei

jedes M unabhängig von den anderen für $H^+$, ein Alkalimetallion, ein Erdalkalimetallion, ein Äquivalent eines zwei oder dreiwertigen Metallions, ein Ammoniumion oder eine organische Ammoniumgruppe steht,
jedes $R^u$ unabhängig von den anderen für Wasserstoff oder eine Methylgruppe steht,
jedes $R^v$ unabhängig von den anderen für Wasserstoff oder COOM steht,
jedes $R^1$, unabhängig voneinander ein $C_1$- bis $C_{20}$-Alkyl, -Cycloalkyl, -Alkylaryl oder -$[AO]_n$-$R^2$ darstellt, wobei A = $C_2$- bis $C_4$-Alkylen, $R^2$ = $C_1$ bis $C_{20}$ -Alkyl, -Cyclohexyl oder Alkylaryl darstellt;
und n = 2 - 300,
jedes $R^3$, unabhängig von den anderen, für eine $C_1$- bis $C_5$-Alkylgruppe, bevorzugt eine Methyl-, Ethyl- oder Isopropylgruppe, steht,
jedes $R^4$, unabhängig von den anderen, für Wasserstoff, eine $C_1$- bis $C_5$-Alkylgruppe, bevorzugt Wasserstoff, steht,
jedes $R^5$, unabhängig von den anderen, eine Alkylgruppe mit 1 - 20 Kohlenstoffatomen oder eine Alkylarylgruppe mit 7 - 20 Kohlenstoffatomen bedeutet,
jedes Z, unabhängig von den anderen, für Sauerstoff oder N-$R^6$ steht,
wobei $R^6$ für Wasserstoff, eine Alkylgruppe mit 1 - 20 Kohlenstoffatomen oder eine Alkylarylgruppe mit 7 - 20 Kohlenstoffatomen steht,
x die Werte 1 - 4 hat,
y die Werte 2 - 250 aufweist,
w die Werte 0 - 5 aufweist,
und wobei a, b, c, die Molanteile der jeweiligen Teilstruktureinheiten S1, S2 und S3,
mit dem Molanteilverhältnis

$$a/b/c = (0.1 - 0.9) / (0 - 0.4) / (0.1 - 0.9),$$

insbesondere a/b/c = (0.4 - 0.8) / (0 - 0.25) / (0.1 - 0.4),

speziell a/b/c = (0.4 - 0.8) / (0.05 - 0.25) / (0.1 - 0.4), und der Massgabe dass a + b + c = 1.

**2.** Kammpolymer **KP** nach Anspruch 1, **dadurch gekennzeichnet, dass** $R^u$ und $R^v$ gleich Wasserstoff sind.

**3.** Kammpolymer **KP** nach wenigstens einem der vorangehenden Ansprüche, **dadurch gekennzeichnet, dass** $R^2 = CH_3$ ist und/oder dass n = 10 - 70, insbesondere 20 - 30, ist.

**4.** Kammpolymer **KP** nach wenigstens einem der vorangehenden Ansprüche, **dadurch gekennzeichnet, dass** $R^3 = CH_3$, $R^4$ = H und $R^5 = CH_3$ ist.

**5.** Kammpolymer **KP** nach wenigstens einem der vorangehenden Ansprüche, **dadurch gekennzeichnet, dass** Z = N-$R^6$ ist, wobei insbesondere $R^6 = CH_3$ ist.

**6.** Kammpolymer **KP** nach wenigstens einem der vorangehenden Ansprüche, **dadurch gekennzeichnet, dass** y = 10 - 70, insbesondere y = 20 - 30, ist.

**7.** Kammpolymer **KP** nach wenigstens einem der vorangehenden Ansprüche, **dadurch gekennzeichnet, dass** ein gewichtsgemitteltes Molekulargewicht ($M_w$) des Kammpolymers **KP** 5'000 - 150'000 g/mol, insbesondere 10'000 - 100'000 g/mol, beträgt.

**8.** Kammpolymer **KP** nach wenigstens einem der vorangehenden Ansprüche, **dadurch gekennzeichnet, dass** ein Verhältnis von a/c = 10:1 - 1:1, insbesondere 5:1 - 1.5:1, ist.

**9.** Zusammensetzung, insbesondere ein Mörtel, ein Beton oder eine zementöse Zusammensetzung, enthaltend mindestens ein Kammpolymer **KP** nach einem der Ansprüche 1 - 8 sowie ein mineralisches Bindemittel, vorzugsweise Zement, insbesondere Portlandzement.

**10.** Verwendung eines Kammpolymers **KP** nach einem der Ansprüche 1 - 8 als Fliessmittel für mineralische Bindemittel, insbesondere für Zement, besonders bevorzugt für Portlandzement.

**11.** Verwendung eines Kammpolymers **KP** nach einem der Ansprüche 1 bis 8 in einer Zusammensetzung enthaltend ein mineralisches Bindemittel zur Verlängerung der Verarbeitungszeit.

**12.** Verfahren zur Herstellung eines Kammpolymers **KP** nach einem der Ansprüche 1 - 8, umfassend die Schritte:

a) Bereitstellen und/oder Herstellen eines Basispolymers **BP** umfassend oder bestehend aus einer Struktureinheit der Formel IV

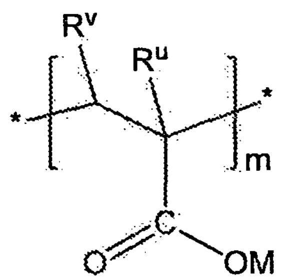

(IV)

wobei

M, $R^u$ und $R^v$ wie in Anspruch 1 definiert sind, und
m > 2, insbesondere m = 20 - 100 ist;

b) Veresterung des Basispolymers **BP** mit

i) einer Verbindung der Formel V

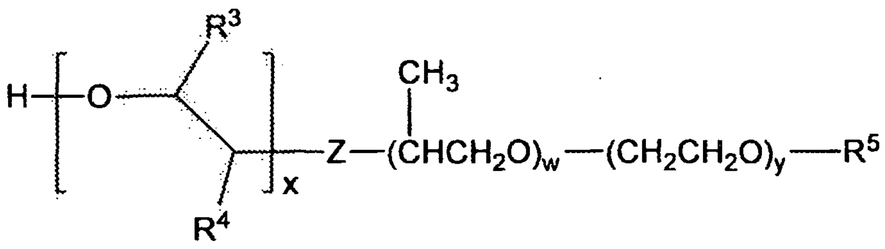 (V)

sowie

ii) optional einer Verbindung der Formel VI

$HO\text{-}R^1$ (VI)

zum Kammpolymer **KP,**

wobei Z, $R^1$, $R^2$, $R^3$, $R^4$, $R^5$, x, y, w und n wie in Anspruch 1 definiert sind.

**13.** Verfahren zur Herstellung eines Kammpolymers **KP** nach einem der Ansprüche 1 - 8, umfassend eine Copolymerisation von:

a Molanteilen von Monomeren **M1** der Formel VII

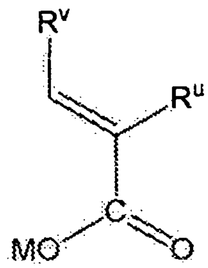

(VII)

b Molanteilen von Monomeren M2 der Formel VIII

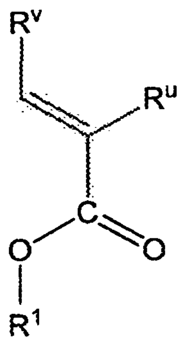

(VIII)

c Molanteilen von Monomeren **M3** der Formel IX

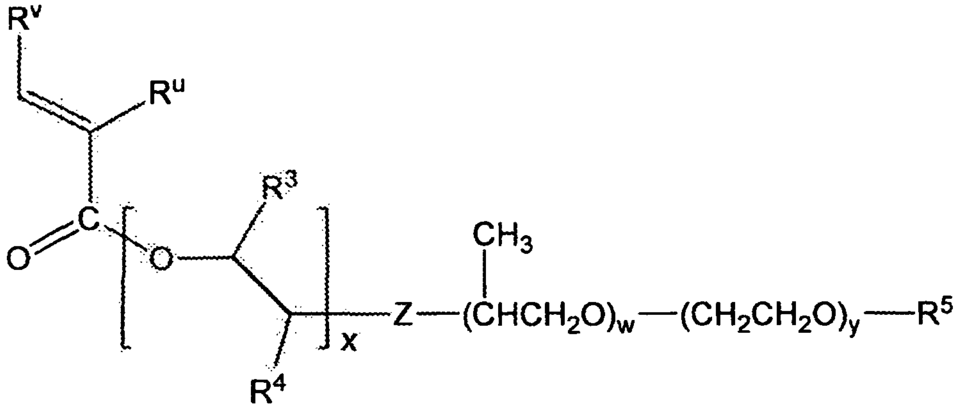

(IX)

wobei a, b, und c die Molanteile der jeweiligen Momomere **M1, M2** und **M3** darstellen, und ein Molanteilverhältnis

$$a/b/c = (0.1 - 0.9) / (0 - 0.4) / (0.1 - 0.9) \text{ ist}$$

und mit der Massgabe dass a + b + c = 1 ist,
und wobei M, Z, $R^u$, $R^v$, $R^1$, $R^2$, $R^3$, $R^4$, $R^5$, x, y, w und n wie in Anspruch 1 definiert sind.

**14.** Kammpolymer **KP** gemäss einem der Ansprüche 1 - 8, erhältlich durch das Verfahren nach Anspruch 12.

**15.** Verbindung der Formel V

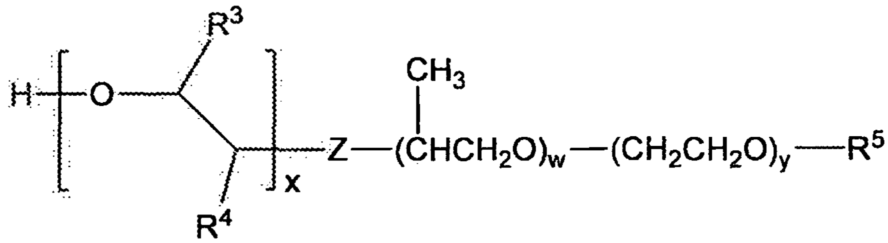

(V)

wobei Z = N-$R^6$ ist und $R^3$, $R^4$, $R^5$, $R^6$, x, y und w wie in Anspruch 1 definiert sind.

**16.** Verbindung der Formel IX

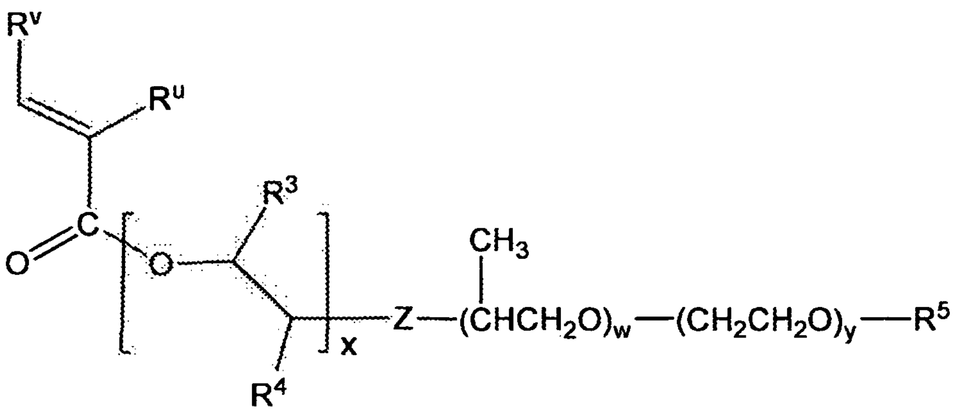

(IX)

wobei Z = N-$R^6$ ist und $R^u$, $R^v$, $R^3$, $R^4$, $R^5$, $R^6$, x, y und w wie in Anspruch 1 definiert sind.

## Claims

1. A comb polymer **KP** comprising or consisting of:

a mole fractions of a partial structural unit **S1** of formula I

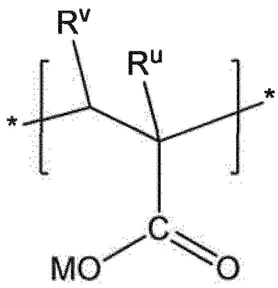

(I)

b mole fractions of a partial structural unit **S2** of formula II

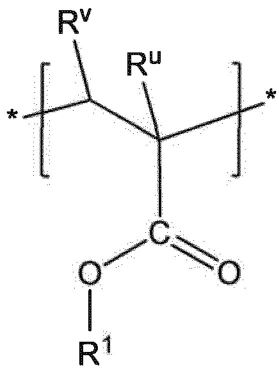

(II)

c mole fractions of a partial structural unit **S3** of formula III

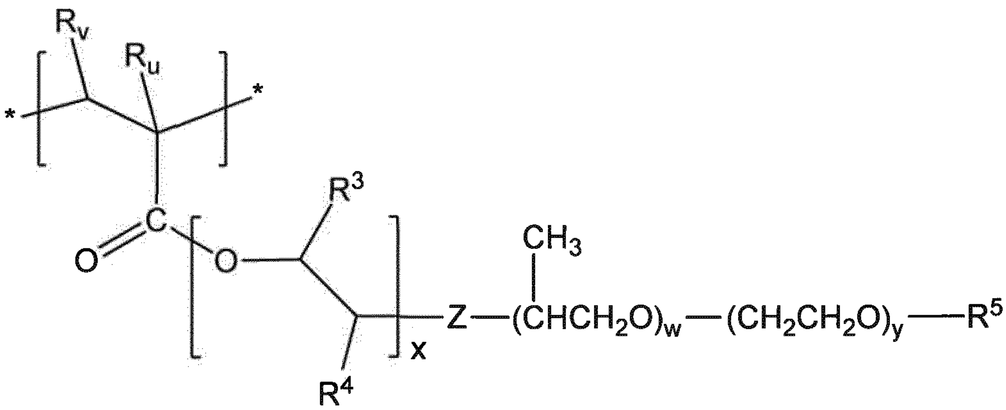

(III)

wherein

each M independently of one another represents $H^+$, an alkali metal ion, an alkaline earth metal ion, an equivalent of a divalent or trivalent metal ion, an ammonium ion or an organic ammonium group,
each $R^u$ independently of one another represents hydrogen or a methyl group,
each $R^v$ independently of one another represents hydrogen or COOM,
each $R^1$ independently of one another represents a $C_1$- to $C_{20}$-alkyl,-Cycloalkyl, -alkylaryl or $-[AO]_n-R^2$,
wherein A = $C_2$- to $C_4$-alkylene, $R^2$ = $C_1$- to $C_{20}$ -alkyl, -cyclohexyl or alkylaryl;
and n = 2 - 300,

each $R^3$, independently of one another, represents a $C_1$- to $C_5$-alkyl group, preferably a methyl, ethyl or Isopropyl group,
each $R^4$, independently of one another, represents hydrogen,a $C_1$- to $C_5$-alkyl group, preferably hydrogen,
each $R^5$, independently of one another, represents an alkyl group with 1 - 20 carbon atoms or an alkylaryl group with 7 - 20 carbon atoms,
each Z, independently of one another, represents oxygen or N-$R^6$, wherein $R^6$ represents hydrogen, an alkyl group with 1 - 20 carbon atoms or an alkylaryl group with 7 - 20 carbon atoms,
x has the values of 1 - 4,
y has the values of 2 - 250,
w has the values of 0 - 5,
and wherein a, b, and c represent the mole fractions of the respective partial structural units S1, S2 and S3, with the molar ratio

$$a/b/c = (0.1 – 0.9) / (0 – 0.4) / (0.1 – 0.9),$$

especially a/b/c = (0.4 - 0.8) / (0 - 0.25) / (0.1 - 0.4),
particularly a/b/c = (0.4 - 0.8) / (0.05 - 0.25) / (0.1 - 0.4),
and the proviso that a + b + c = 1.

2. The comb polymer **KP** according to claim 1, **characterized in that** $R^u$ and $R^v$ are hydrogen.

3. The comb polymer **KP** according to at least one of the preceding claims, **characterized in that** $R^2 = CH_3$ and/or that n = 10 - 70, especially 20 - 30.

4. The comb polymer **KP** according to at least one of the preceding claims, **characterized in that** $R^3 = CH_3$, $R^4 = H$ and $R^5 = CH_3$ .

5. The comb polymer **KP** according to at least one of the preceding claims, **characterized in that** Z = N-$R^6$, wherein especially $R^6 = CH_3$.

6. The comb polymer **KP** according to at least one of the preceding claims, **characterized in that** y = 10 - 70, especially y = 20 - 30.

7. The comb polymer **KP** according to at least one of the preceding claims, **characterized in that** the weight-average molecular weight ($M_w$) of the comb polymer **KP** is 5,000 - 150,000 g/mol, especially 10,000 - 100,000 g/mol.

8. The comb polymer **KP** according to at least one of the preceding claims, **characterized in that** the ratio a/c = 10:1 - 1:1, especially 5:1 - 1.5:1.

9. A composition, especially a mortar, a concrete or a cementitious composition, containing at least one comb polymer **KP** according to one of claims 1 - 8 as well as a mineral binder, preferably cement, especially Portland cement.

10. A use of a comb polymer **KP** according to one of claims 1 - 8 as water reducer for mineral binders, especially for cement, particularly preferably for Portland cement.

11. A use of a comb polymer **KP** according to one of claims 1 to 8 in a composition containing a mineral binder to prolong the processing time.

12. A method for producing a comb polymer **KP** according to one of claims 1 - 8, comprising the steps of:

a) providing and/or producing a base polymer **BP** comprising or consisting of a structural unit of formula IV

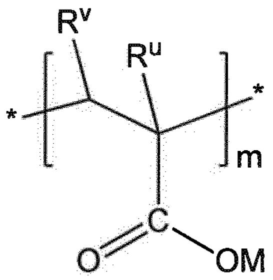

(IV)

wherein

M, $R^u$ and $R^v$ are defined as in claim 1 and
m > 2, especially m = 20 - 100;

b) esterification of the base polymer **BP** with

i) a compound of formula V

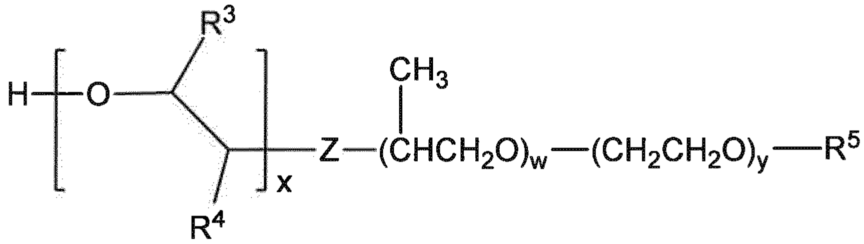

(V)

as well as
ii) optionally a compound of formula VI

$HO-R^1$ (VI)

to form a comb polymer KP,

wherein Z, $R^1$, $R^2$, $R^3$, $R^4$, $R^5$, x, y, w and n are defined as in claim 1.

**13.** A method for producing a comb polymer **KP** according to one of claims 1 - 8, comprising copolymerization of:

a mole fractions of monomer **M1** of formula VII

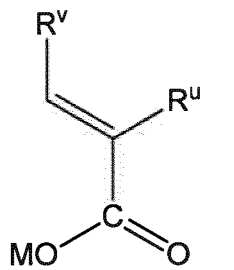

(VII)

b mole fractions of monomer **M2** of formula VIII

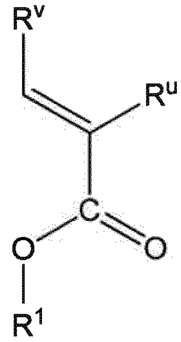

(VIII)

c mole fractions of monomer **M3** of formula IX

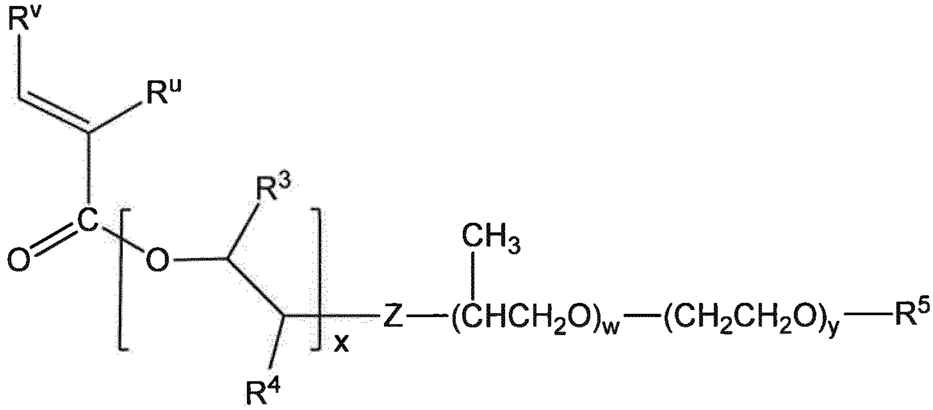

(IX)

wherein a, b, and c are the mole fractions of the respective monomers **M1, M2** and **M3,** and the molar ratio

$$a/b/c = (0.1 - 0.9) / (0 - 0.4) / (0.1 - 0.9)$$

and with the proviso that a + b + c = 1,

and wherein M, Z, $R^u$, $R^v$, $R^1$, $R^2$, $R^3$, $R^4$, $R^5$, x, y, w and n are defined as in claim 1.

**14.** The comb polymer **KP** according to one of claims 1 - 8, obtainable by the method according to claim 12.

**15.** A compound of formula V

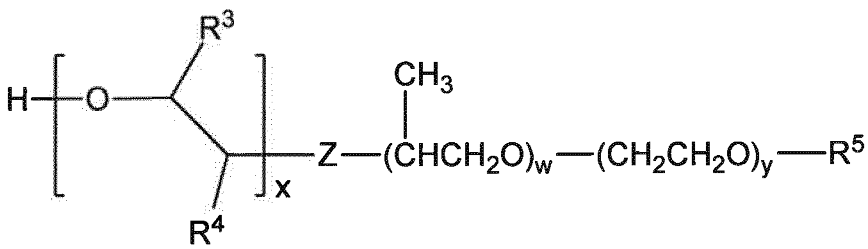

(V)

wherein Z = N-$R^6$ and $R^3$, $R^4$, $R^5$, $R^6$, x, y and w are defined as in claim 1.

**16.** A compound of formula IX

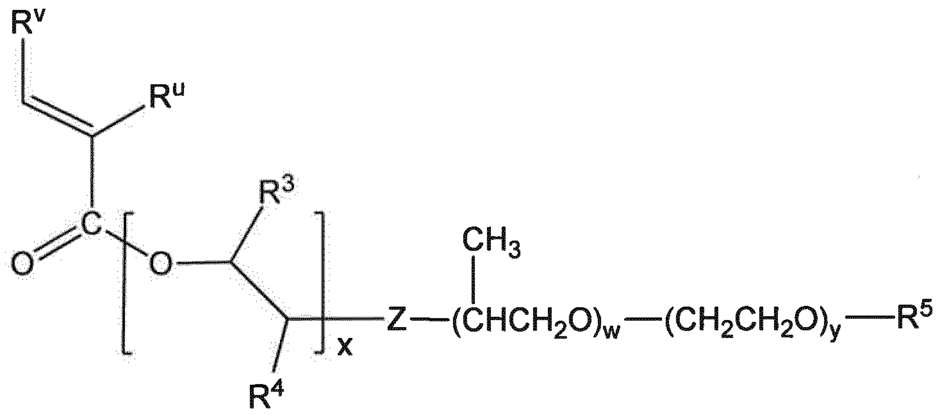

(IX)

wherein Z = N-$R^6$ and $R^u$, $R^v$, $R^3$, $R^4$, $R^5$, $R^6$, x, y and w are defined as in claim 1.

**Revendications**

1. Polymère en peigne KP comprenant ou constitué par :

   a fractions molaires d'une unité structurale partielle S1 de formule I

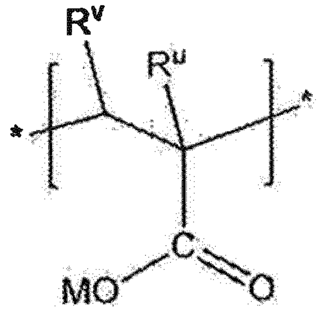

(I)

   b fractions molaires d'une unité structurale partielle S2 de formule II

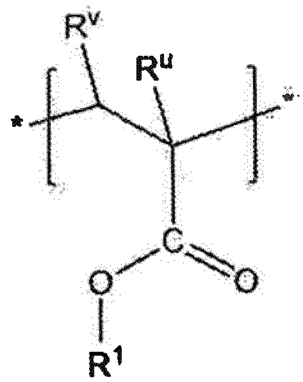

(II)

   c fractions molaires d'une unité structurale partielle S3 de formule III

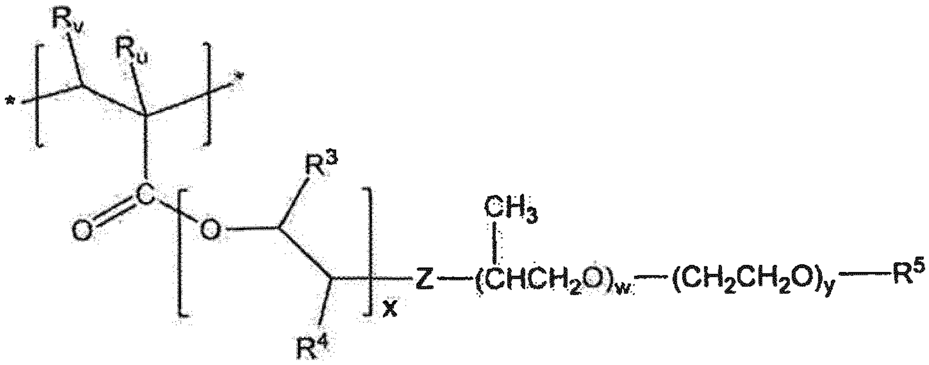

(III)

dans lesquelles

chaque M représente indépendamment des autres $H^+$, un ion de métal alcalin, un ion de métal alcalino-terreux, un équivalent d'un ion métallique bi- ou trivalent, un ion ammonium ou un groupe ammonium organique,
chaque $R^u$ représente indépendamment des autres l'hydrogène ou un groupe méthyle,
chaque $R^v$ représente indépendamment des autres l'hydrogène ou COOM,
chaque $R^1$ représente indépendamment des autres un alkyle, cycloalkyle, alkylaryle en $C_1$ à $C_{20}$ ou $[AO]_n-R^2$, avec A = alkylène en $C_2$ à $C_4$, $R^2$ = alkyle, cyclohexyle ou alkylaryle en $C_1$ à $C_{20}$ ;
et n = 2 à 300,
chaque $R^3$ représente indépendamment des autres un groupe alkyle en $C_1$ à $C_5$, de préférence méthyle, éthyle ou isopropyle,
chaque $R^4$ représente indépendamment des autres l'hydrogène, un groupe alkyle en $C_1$ à $C_5$, de préférence l'hydrogène,
chaque $R^5$ représente indépendamment des autres un groupe alkyle de 1 à 20 atomes de carbone ou un groupe alkylaryle de 7 à 20 atomes de carbone,
chaque Z représente indépendamment des autres l'oxygène ou $N-R^6$,
$R^6$ représentant l'hydrogène, un groupe alkyle de 1 à 20 atomes de carbone ou un groupe alkylaryle de 7 à 20 atomes de carbone,
x a les valeurs 1 à 4,
y présente les valeurs 2 à 250,
w présente les valeurs 0 à 5,
et a, b, c étant les fractions molaires des unités structurales partielles S1, S2 et S3 respectives,
avec le rapport entre les fractions molaires

$$a/b/c = (0{,}1 \text{ à } 0{,}9)/(0 \text{ à } 0{,}4)/(0{,}1 \text{ à } 0{,}9),$$

notamment a/b/c = (0,4 à 0,8)/(0 à 0,25) / (0,1 à 0,4),
particulièrement a/b/c = (0,4 à 0,8)/(0,05 à 0,25) / (0,1 à 0,4),
et à condition que a + b + c = 1.

2. Polymère en peigne KP selon la revendication 1, **caractérisé en ce que** $R^u$ et $R^v$ représentent l'hydrogène.

3. Polymère en peigne KP selon au moins l'une quelconque des revendications précédentes, **caractérisé en ce que** $R^2 = CH_3$ et/ou **en ce que** n = 10 à 70, notamment 20 à 30.

4. Polymère en peigne KP selon au moins l'une quelconque des revendications précédentes, **caractérisé en ce que** $R^3 = CH_3$, $R^4 = H$ et $R^5 = CH_3$.

5. Polymère en peigne KP selon au moins l'une quelconque des revendications précédentes, **caractérisé en ce que** $Z = N-R^6$, avec notamment $R^6 = CH_3$.

6. Polymère en peigne KP selon au moins l'une quelconque des revendications précédentes, **caractérisé en ce que**

y = 10 à 70, notamment y = 20 à 30.

**7.** Polymère en peigne KP selon au moins l'une quelconque des revendications précédentes, **caractérisé en ce qu'**un poids moléculaire moyen en poids ($M_w$) du polymère en peigne KP est de 5 000 à 150 000 g/mol, notamment de 10 000 à 100 000 g/mol.

**8.** Polymère en peigne KP selon au moins l'une quelconque des revendications précédentes, **caractérisé en ce qu'**un rapport de a/c est de 10:1 à 1:1, notamment 5:1 à 1,5:1.

**9.** Composition, notamment mortier, béton ou composition cimentaire, contenant au moins un polymère en peigne KP selon l'une quelconque des revendications 1 à 8, ainsi qu'un liant minéral, de préférence un ciment, notamment le ciment de Portland.

**10.** Utilisation d'un polymère en peigne KP selon l'une quelconque des revendications 1 à 8 en tant que fluidifiant pour des liants minéraux, notamment pour un ciment, de manière particulièrement préférée pour le ciment de Portland.

**11.** Utilisation d'un polymère en peigne KP selon l'une quelconque des revendications 1 à 8 dans une composition contenant un liant minéral pour le prolongement de la durée d'usinage.

**12.** Procédé de fabrication d'un polymère en peigne KP selon l'une quelconque des revendications 1 à 8, comprenant les étapes suivantes :

a) la préparation et/ou la fabrication d'un polymère de base BP comprenant ou constitué par une unité structurale de formule IV

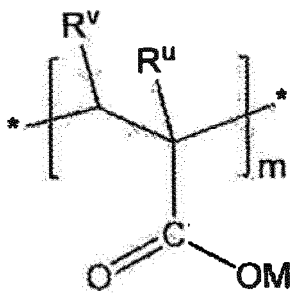

(IV)

dans laquelle

M, $R^u$ et $R^v$ sont tels que définis dans la revendication 1, et
m > 2, notamment m = 20 à 100 ;

b) l'estérification du polymère de base BP avec

i) un composé de formule V

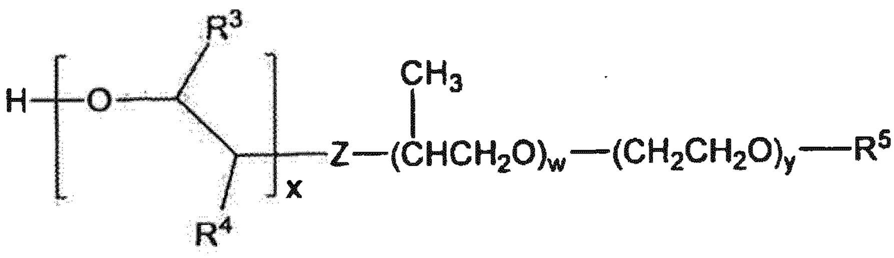

(V)

et
ii) éventuellement un composé de formule VI

$HO-R^1$ (VI)

pour former le polymère en peigne KP,
Z, $R^1$, $R^2$, $R^3$, $R^4$, $R^5$, x, y, w et n étant tels que définis dans la revendication 1.

**13.** Procédé de fabrication d'un polymère en peigne KP selon l'une quelconque des revendications 1 à 8, comprenant une copolymérisation de :

a fractions molaires de monomères M1 de formule VII

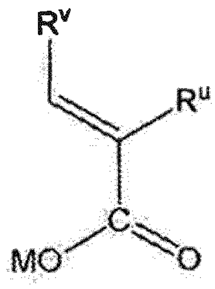

(VII)

b fractions molaires de monomères M2 de formule VIII

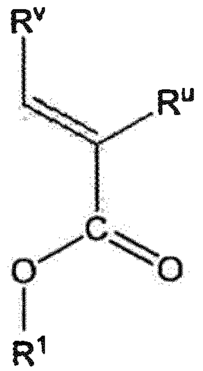

(VIII)

c fractions molaires de monomères M3 de formule IX

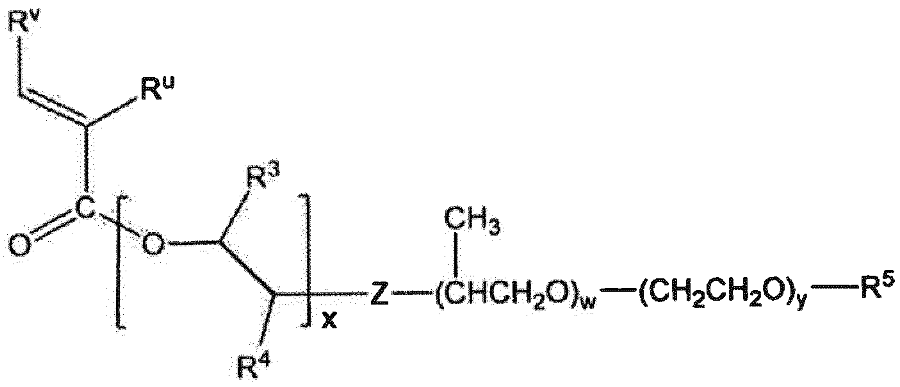

(IX)

a, b et c représentant les fractions molaires des monomères M1, M2 et M3 respectifs, et un rapport entre les fractions molaires étant

a/b/c = (0,1 à 0,9)/(0 à 0,4)/(0,1 à 0,9),

à condition que a + b + c = 1,
et M, Z, $R^u$, $R^v$, $R^1$, $R^2$, $R^3$, $R^4$, $R^5$, x, y, w et n étant tels que définis dans la revendication 1.

**14.** Polymère en peigne KP selon l'une quelconque des revendications 1 à 8, pouvant être obtenu par le procédé selon la revendication 12.

**15.** Composé de formule V

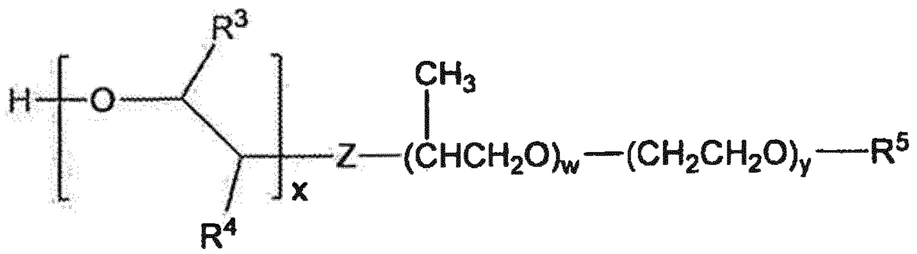

(V)

dans laquelle Z = N-$R^6$, et $R^3$, $R^4$, $R^5$, $R^6$, x, y et w sont tels que définis dans la revendication 1.

**16.** Composé de formule IX

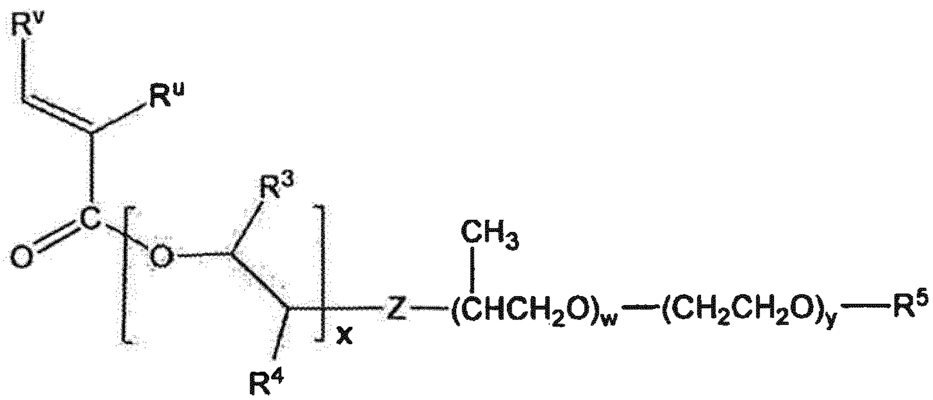

(IX)

dans laquelle Z = N-$R^6$, et $R^u$, $R^v$, $R^3$, $R^4$, $R^5$, $R^6$, x, y et w sont tels que définis dans la revendication 1.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1138697 B1, Sika AG
- DE 102005061153 A1
- WO 2010029117 A2